# EUROPEAN PATENT SPECIFICATION

(11) **EP 4 012 342 B1**
(45) Date of publication and mention of the grant of the patent: **07.02.2024**
(21) Application number: 21791232.8
(22) Date of filing: 21.06.2021
(51) Int. Cl.: G01C 21/20, G01C 21/00

(54) **DATA PROCESSING METHOD AND DEVICE**
DATENVERARBEITUNGSVERFAHREN UND -VORRICHTUNG
PROCÉDÉ ET DISPOSITIF DE TRAITEMENT DE DONNÉES

(30) Priority: 15.10.2020 CN 202011105412
(43) Date of publication of application: 15.06.2022
(73) Proprietor: Guangzhou Xiaopeng Autopilot Technology Co., Ltd., Guangzhou, Guangdong 510725 (CN)
(72) Inventor: CHAI, Wennan, Guangzhou, Guangdong 510725 (CN); LIU, Zhongyuan, Guangzhou, Guangdong 510725 (CN); LI, Hongjun, Guangzhou, Guangdong 510725 (CN); HUANG, Ya, Guangzhou, Guangdong 510725 (CN); JIANG, Shaofeng, Guangzhou, Guangdong 510725 (CN); LAI, Jianming, Guangzhou, Guangdong 510725 (CN); XIAO, Zhiguang, Guangzhou, Guangdong 510725 (CN)
(74) Representative: Habermann, Hruschka & Schnabel
(86) International application number: PCT/CN2021/101351
(87) International publication number: WO 2022/077949

(56) References cited:
- CN-A- 110 914 639
- CN-A- 112 229 411
- US-A1- 2013 297 198
- US-A1- 2016 104 378
- US-A1- 2018 255 431
- US-A1- 2020 292 318
- US-A1- 2020 292 318

## Description

### CROSS-REFERENCE TO RELATED APPLICATIONS

The present application claims a priority to Chinese Patent Application No. 202011105412.3, titled "METHOD AND APPARATUS FOR DATA PROCESSING", and filed on October 15, 2020, the entire disclosure of which is incorporated herein by reference.

### TECHNICAL FIELD

The present disclosure relates to the field of data processing technologies, and more particularly, to a method and an apparatus for data processing.

### BACKGROUND

A map is an indispensable tool for a vehicle during driving, helping the vehicle with positioning or navigating according to data in the map.

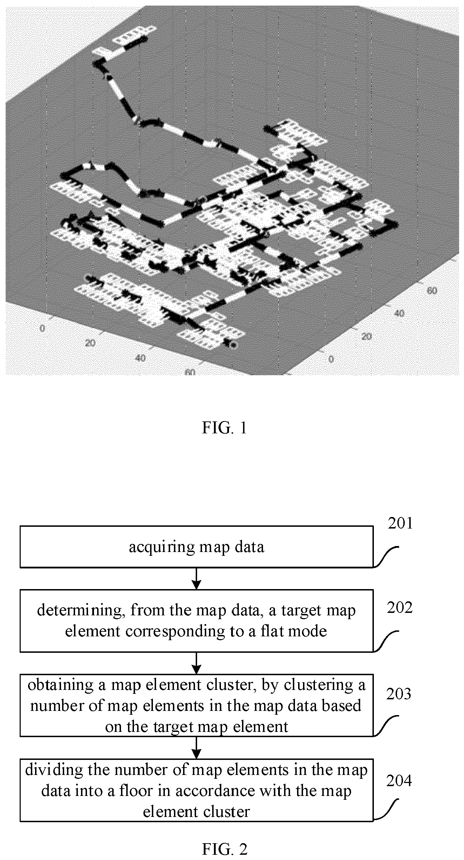

In the process of generating a map of a target location, map data of the target location may be collected in real time for generating the map.As shown in FIG. 1, if the target location has multiple floors, the collected map data may be distributed on different floors. In this case, it is difficult to distinguish the floors where the map data collected in real time is located, thus making it difficult to apply the map for positioning or navigation of the vehicle on the multiple floors.US20180255431A1 discloses a method of positioning mobile devices in a three-dimensional space, which can improve the accuracy of estimating elevationand/or generates calibration data for mobile devices in view of current weather conditions.US2020292318A1 discloses a method for providing altitude maps with an improved quality and precision, in particular with respect to the determination of multi-layer areas and their layer structure.

### SUMMARY

In view of the above problems, the present disclosure provides a method and an apparatus for data processing, capable of overcoming the above problems or at least partially solving the above problems.

A method for data processing is provided according to claim 1.

Optionally, said determining the target path point element corresponding to the flat road mode based on the gradient information includes:determining mode coefficients corresponding to the plurality of path point elements based on the gradient information; and determining the target path point element corresponding to the flat road mode based on the mode coefficients.

Optionally, said obtaining the map element cluster by clustering the target map elements based on the height information of the target map elementsincludes:determining first height information of the target map elements; andobtaining the map element cluster, by clustering the target map elements based onthe first height information.

Optionally, said performing the floor division on the target map elements in accordance with the height information corresponding to the map element cluster includes:determining average height information of the target map elements in the map element cluster;determining floor information corresponding to the average height information; andperforming the floor division on the target map elements in the map element cluster in accordance with the floor information.

Optionally, the method further includes, prior to said determining, from the map data, the target map elements corresponding to the flat road mode: determining, from the map data, an entrance landmark element that is an entrance-and-exit of a regional road; and acquiring second height information corresponding to the entrance landmark element, and performing a height calibration on the target map elements by using the second height information as a reference.

0ptionally, the map data is map data for a multi-floor parking lot.

An apparatus for data processing is provided according to claim 7.

Optionally, the target path point element determining submodule includes: a mode coefficient determining unit configured to determine mode coefficients corresponding to the plurality of path point elements based on the gradient information; and a corresponding element determining unit configured to determine the target path point element corresponding to the flat road mode based on the mode coefficients.

Optionally, the floor division moduleincludes: an average height information determining submodule configured todetermine average height information of the target map elements in the map element cluster; a floor information determining submodule configured todetermine floor information corresponding to the average height information;and a map element floor division submodule configured to perform the floor divisionon the target map elements in the map element cluster in accordance with the floor information.

Optionally, the apparatus further includes: an entrance landmark element determining module configured to determine, from the map data, an entrance landmark element that is an entrance-and-exit of a regional road; and a height calibration module configured to acquire second height information corresponding to the entrance landmark element, and performing a height calibration on the target map elements by using the second height information as a reference.

Optionally, the map data is map data for a multi-floor parking lot.

A server is provided. The server includes a processor, a memory, and a computer program stored on the memory and executable on the processor. The computer program, when executed by the processor, implements the method for data processing as described above.

A computer-readable storage medium is provided. The computer-readable storage medium has a computer program stored thereon. The computer program, when executed by a processor, performs the method for data processing as described above.

The embodiments of the present disclosure have the following advantages. In the embodiments of the present disclosure, the map data is acquired; the target map elements corresponding to the flat road mode is determined from the map data; the map element cluster is obtained, by clustering the target map elements based on the height information of the target map elements; and the floor division is performed on the target map elements in accordance with the height information corresponding to the map element cluster. In this way, floor division based on the map elements is achieved, such that the map data can be applied to multiple floors, and practicability of the map is improved.

The above description is only a summary of the technical solutions of the present disclosure. In order for the technical means of the present disclosure to be more clearly understood and thus embodied in accordance with the content of the description, and in order to make the above and other objects, features and advantages of the present disclosure more obvious and understandable, specific implementations of the present disclosure are exemplified below.

### BRIEF DESCRIPTION OF DRAWINGS

In order to clearly explain technical solutions of embodiments of the present disclosure or in the related art, drawings used in the description of the embodiments or the related art are briefly described below. Obviously, the drawings as described below are merely some embodiments of the present disclosure. Based on these drawings, other drawings can be obtained by those skilled in the art without creative effort.
FIG. 1 is a schematic diagram illustrating a multi-floor map.
FIG. 2 is a flowchart illustrating steps of a method for data processing according to an embodiment of the present disclosure.
FIG. 3 is a flowchart illustrating steps of another method for data processing according to an embodiment of the present disclosure.
FIG. 4 is a flowchart illustrating steps of still another method for data processing according to an embodiment of the present disclosure.
FIG. 5 is a schematic diagram illustrating an instance of a method for data processing according to an embodiment of the present disclosure.
FIG. 6 is a schematic diagram illustrating a structure of an apparatus for data processing according to an embodiment of the present disclosure.

### DESCRIPTION OF EMBODIMENTS

In order to make the above objects, solutions and advantages of the present disclosure more obvious and understandable, solutions according to embodiments of the present disclosure will be described clearly and completely below in conjunction with the accompanying drawings. Obviously, embodiments described here are only part of embodiments of the present disclosure and are not all embodiments of the present disclosure. All other embodiments obtained based on the embodiments given in the present disclosure by those skilled in the art without creative effort are within scope of the present disclosure.

FIG. 2 is a flowchart illustrating steps of a method for data processing according to an embodiment of the present disclosure. Referring to FIG. 2, the method specifically includes the following steps.

In step 201, map data is acquired.

The map data can be map data for a multi-floor parking lot. The multi-floor parking lot can be an above-ground parking lot or an underground parking lot. The map data can be map data subj ected to multiple times of fusion. The map data may include a number of map elements.

In practical applications, a vehicle can collect map data in real time for the area where the vehicle is located, such as map elements in the area of a parking lot, and upload the map data to a server. Further, the server can receive map data acquired by different vehicles in a same area, to perform map fusion according to the map data collected by a plurality of vehicles and the map data preset in the server, so that the map data subjected to multiple times of fusion can be obtained.

In step 202, target map elements corresponding to a flat mode are determined from the map data.

The map elements in the map data may be divided into a flat mode and a ramp mode. A map element corresponding to the flat mode indicates that the map element is actually located on a flat road, and a map element corresponding to the ramp mode may indicate that the map element is actually located on a ramp road. The map elements include path point elements and landmark elements. The target map elements include target path point elements and a target landmark elements. The target path point element is a path point element of a flat type. The target landmark element may be a landmark element of a flat type.

A path point element is a point on a road in the map data. For example, the road may be divided according to a preset distance, and then a plurality of segments of the road and end points of the plurality of segments of the road can be obtained. The landmark element may include an element such as a speed bump, a curve entry point, a curve exit point, a ramp entry point, a ramp exit point, an entrance, and a parking space in the map data.

After the map data is acquired, height information of the map elements in the map data, such as height information of path point elements and height information of landmark elements, may be determined. Then map elements in the flat mode and map elements in the ramp mode may be determined based on the height information.

In practical applications, when a vehicle collects map data of an area where the vehicle is located, it can collect map elements of the area where the vehicle is located and position information and height information of the map elements, such that the position information and the height information of any map element can be determined from the map data.

In an embodiment of the present disclosure, prior to step 202, the method may further include the following steps.

An entrance landmark element is determined from the map data. Second height information corresponding to the entrance landmark element is acquired. A height calibration is performed on the number of map elements in the map data by using the second height information as a reference.

The entrance landmark element may be an entrance-and-exit of a regional road, such as an entrance-and-exit of a parking lot, and the second height information may be height information of the entrance landmark element.

In practical applications, the entrance landmark element can be determined as the map element in the map data which is fused the most number of times, because when different vehicles enter the regional road, they will all pass through the entrance-and-exit of the regional road (that is, the map data collected by each vehicle is supposed to include the map element corresponding to the entrance-and-exit) and thus the map element corresponding to the entrance-and-exit is fused in each time of map fusion.

After determining the entrance landmark element, the position information and the height information of the entrance landmark element can be determined. Since the entrance landmark element is supposed to be an entrance of a road in an area where a vehicle is located (that is, the entrance landmark element may be a starting point), relative height information of all map elements in the map data with respect to the entrance landmark element can be determined by taking the height information of the entrance landmark element as a reference (that is, the height information of all map elements in the map data may be height information relative to the entrance landmark element). Then the step of determining the map elements in the flat mode and the map elements in the ramp mode based on the height information can be performed in step 202.

In step 203, a map element cluster is obtained, by clustering a number of map elements in the map data based on the target map elements.

The map element cluster is a set of map elements in which map elements in the map data are classified based on height information.

After determining map elements corresponding to the flat mode, clustering is performed based on the height information of the map elements corresponding to the flat mode. For example, the map elements with height information of 1 to 3 meters may be classified into one type as a map element cluster A, and the map elements with height information of 3 to 6 meters may be classified into another type as a map element cluster B. As such, one or more sets of map elements, that is, one or more map element clusters, can be obtained.

In practical applications, since the map elements in the map data may actually be elements on a flat road or elements on a ramp road, when the step of clustering the map elements in the map data in step 203 is executed, it is difficult to cluster the map elements in the map data to obtain the map element cluster, provided that the map elements on the ramp road are considered and the map elements in the map data may be continuous.

In the embodiment of the present disclosure, however, the map elements in the flat mode and the map elements in the ramp mode can be determined based on the height information, and then clustering can be performed based on the height information of the map elements corresponding to the flat mode, so that the map element cluster can be obtained.

In addition, the map elements in a same floor are supposed to be map elements of the flat type. Therefore, by performing clustering only based on the height information of the map elements corresponding to the flat mode, not only the calculation amount of clustering can be reduced, but also the map element cluster of the same floor can be obtained.

In step 204, a number of map elements are divided in the map data into a floor in accordance with the map element cluster.

After the map element cluster is obtained, floor division is performed on the map elements in the map data based on the height information corresponding to different map element clusters.

For example, the height information corresponding to the map element cluster A may be 1 to 3 meters, and the height information corresponding to the map element cluster B may be 3 to 6 meters. Accordingly, it can be determined that the floor corresponding to the map element cluster A is 1-st floor and the map elements in the map element cluster A may be map elements of 1-st floor, and that the floor corresponding to the map element cluster B is 2-nd floor and the map elements in the map element cluster B may be map elements of 2-nd floor.

In the embodiment of the present disclosure, the map data is acquired; the target map elements corresponding to the flat mode are determined from the map data; the map element cluster is obtained, by clustering a number of map elements in the map data based on the target map elements; and the number of map elements in the map data are divided into a floor in accordance with the map element cluster. In this way, floor division based on the map elements is achieved, such that the map data can be applied to multiple floors, and practicability of the map is improved.

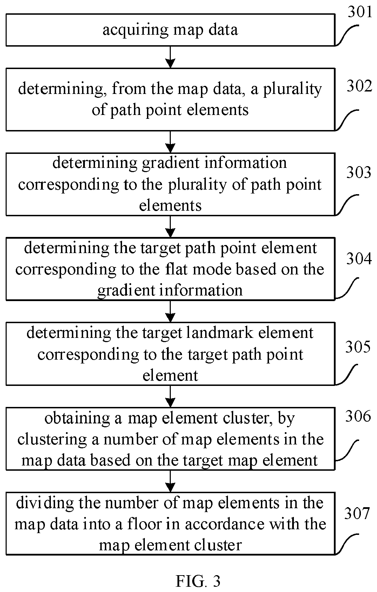

FIG. 3 is a flowchart illustrating steps of another method for data processing according to an embodiment of the present disclosure. Referring to FIG. 3, the method specifically includes the following steps.

In step 301, map data is acquired.

In step 302, a plurality of path point elements are determined from the map data.

In practical applications, the map data include a plurality of map elements, and the map elements include path point elements and landmark elements. The path point elements are points on a road in the map data, so that the road can be divided in accordance with a preset distance, and then a plurality of segments of the road and end points of the plurality of segments of the road can be obtained.

In step 303, gradient information corresponding to the plurality of path point elements is determined.

The gradient information can be angle information of the plurality of path point elements with respect to a horizontal plane.

After determining the plurality of path point elements, height information of the path point elements can be determined from the map data, and distance information between the plurality of path point elements can be determined.

In practical applications, mileage information of the vehicle can be collected, so that the mileage information corresponding to the path point elements can be determined, and the distance information between the plurality of path point elements can be determined according to the mileage information. For example, mileage information corresponding to the path point element A may be 1001 meters, and mileage information corresponding to the path point element B may be 1003 meters, so the distance information between the path point element A and the path point element B may be 2 meters.

After the distance information is determined, a selection window with a preset range can be determined. For example, a selection window within a range of 5 meters is determined. Then path point elements within the range can be determined through the selection window. For example, the path point element A can be taken as a starting point, and then according to the selection window, a plurality of path point elements along the road and within a distance of 5 meters from the path point element A can be determined.

In an embodiment of the present disclosure, if a path point element is not selected repeatedly, that is, one path point element only corresponds to one selection window, an error is prone to occur when determining the gradient information. For example, a certain path point element may be a transition point between a ramp road and a flat road. When selecting through the selection window, only the path point element on the ramp road is selected, and then it is determined that the gradient information corresponding to the path point element is the gradient information corresponding to the ramp road. However, it actually should be the gradient information corresponding to the flat road.

Therefore, after selection is made by taking the path point element A as the starting point, the path point elements along the road whose distances from the path point element B are within the preset range can continue to be determined by taking the path point element B adjacent to the path point element A as the starting point, until path point elements selected with the last path point element as the starting point are determined.

After determining the plurality of path point elements according to the selection window, gradient information corresponding to each path point element can be generated according to height information of the plurality of path point elements and distance information between the plurality of path point elements.

In practical applications, a fitting straight line can be generated based on the height information of each path point element and the distance information between a plurality of path point elements. Further, angle information between the fitting straight line and a preset horizontal plane can be determined.

The fitting straight line may be a straight line including as many path point elements as possible, or may be a straight line that minimizes distances of path point elements from the straight line.

For example, the path point element A and the path point element B can be determined according to the selection window. It can be determined that the height information of the path point element A is 1 meter, the height information of path point element B is 2 meters, and the distance between the path point element A and the path point element B is 2 meters. Then the ramp information corresponding to the selection window can be determined to be 30 degrees, that is, the angle information between the fitting straight line determined by the selection window and the preset horizontal plane can be 30 degrees.

In step 304, the target path point element corresponding to the flat mode is determined based on the gradient information.

After determining the gradient information, it can be determined whether the gradient information is greater than a preset angle threshold, for example, 2 degrees. When the gradient information is greater than the preset angle threshold, it can be determined that the selection window is a selection window in the ramp mode. Then it can be determined that a path point element in the selection window is a path point element corresponding to the ramp mode, that is, the path point element can be a path point element of a ramp type. The path point element of the ramp type can be a path point actually located on a ramp road.

When the gradient information is smaller than or equal to the preset angle threshold, it can be determined that the selection window is a selection window in the flat mode. Then it can be determined that a path point element in the selection window is a path point element corresponding to the flat mode, that is, the path point element can be a path point element of a flat type. The path point element of the flat type can be a path point actually located on a flat road.

In practical applications, since one path point element can be selected by a plurality of selection windows, and the modes of different selection windows can be different, the modes of the plurality of selection windows can be determined respectively, and the type of the path point element can be determined according to the number of the selection windows in different modes.

For example, the path point element may be selected by 5 selection windows. Among them, the mode corresponding to 4 selection windows may be a flat mode, and the mode corresponding to 1 selection window may be a ramp mode. 4 is greater than 1, that is, the number of selection windows of the flat mode is greater than the number of selection windows of the ramp mode. Thus the path point element can be determined to be a path point element of the flat type.

In an embodiment of the present disclosure, step 304 may include the following substeps.

In sub-step 11, mode coefficients corresponding to the plurality of path point elements are determined based on the gradient information.

A mode coefficient can be a coefficient of the mode of a selection window, and a value of the coefficient can be determined from the map data.

After the gradient information is determined, it can be determined whether the gradient information is larger than a preset angle threshold value. When the gradient information is larger than the preset angle threshold value, the selection window can be determined to be a selection window of a ramp mode, and a mode coefficient corresponding to the ramp mode is determined. When the gradient information is smaller than or equal to the preset angle threshold value, the selection window can be determined to be a selection window of a flat mode, and a mode coefficient corresponding to the flat mode is determined.

The mode coefficient of a path point element selected by the selection window can be the mode coefficient of the selection window.

In practical applications, the map data can include road information of an area where the vehicle is located, such as a degree of unevenness. Then, a mode coefficient corresponding to a ramp mode and a mode coefficient corresponding to a flat mode can be determined based on the road information. For example, the mode coefficient corresponding to the ramp mode may be 1, and the mode coefficient corresponding to the flat mode may be 0.

In sub-step 12, the target path point element corresponding to the flat mode is determined based on the mode coefficients.

After the mode coefficient is determined, it may be determined whether the path point element is a path point element of a flat type according to the value of the mode coefficient.

In practical applications, since one path point element can be selected by a plurality of selection windows, and the modes of different selection windows may be different, the corresponding mode coefficients may also be different. Further, the mode coefficients of the path point element may be processed statistically, and an average value of the mode coefficients can be calculated. It can be determined whether the average value of the mode coefficients is greater than a preset coefficient threshold. When the average value of the mode coefficients is greater than the preset coefficient threshold, the path point element can be determined as a path point element of a ramp type. When the average value of the mode coefficients is smaller than or equal to the preset coefficient threshold, the path point element can be determined as a path point element of a flat type.

For example, the preset coefficient threshold may be 0.5, the mode coefficient corresponding to the flat mode may be 0, the mode coefficient corresponding to the ramp mode may be 0.9. The path point element may be selected by 3 selection windows. Among them, the mode corresponding to 2 selection windows may be the flat mode, and the mode corresponding to 1 selection window may be the ramp mode. Then it can be determined that the average value of the mode coefficients is 0.3, which is smaller than the preset coefficient threshold. Hence, it can be determined that the path point element is a path point element of the flat type.

In step 305, the target landmark element corresponding to the target path point element is determined.

After determining the path point element of the flat type, the landmark element corresponding to the path point element is determined. Since the path point element is the path point element of the flat type, that is, the path point element is a path point actually located on a flat road, the landmark element corresponding to the path point element is determined to be the landmark element of the flat type.

In practical applications, a path point element may correspond to one or more landmark elements, or may not correspond to any landmark element. For example, in a direction perpendicular to a road, a landmark element such as a parking space and a lane line may be collected, and then the landmark element corresponding to a path point element in the road can be determined.

In step 306, a map element cluster is obtained, by clustering a number of map elements in the map data based on the target map elements.

After determining path point elements and landmark elements corresponding to the flat mode, clustering may be performed based on the height information of the path point elements and the landmark elements. For example, the path point elements and the landmark elements having height information of 1 to 3 meters may be classified into one type as a map element cluster A, and the path point elements and the landmark elements having height information of 3 to 6 meters may be classified into another type as a map element cluster B. As such, one or more sets of map elements, that is, one or more map element clusters, may be obtained.

In practical applications, since there can be a plurality of path point elements and landmark elements corresponding to the flat mode, clustering is performed according to all path point elements and landmark elements corresponding to the flat mode, such that map element clusters corresponding to all the path point elements and landmark elements can be obtained.

However, in order to obtain the map element clusters corresponding to all the path point elements and landmark elements, clustering should be performed according to all the path point elements and landmark elements corresponding to the flat mode. The calculation amount is large, the efficiency is low, and the requirement on hardware is high.

In an embodiment of the present disclosure, a sparsification may be performed on the path point elements, that is, specific path point elements may be selected from all the path point elements according to a preset sparse distance. For example, the sparse distance may be 5 meters. Then one path point element may be selected every 5 meters, and a landmark element corresponding to the selected path point element is determined. Map element clusters may be obtained according to the path point elements and the landmark elements selected according to the sparse distance.

In practical applications, if the path point elements selected according to the preset sparse distance belong to the same map element cluster, and because the path point elements are continuous along the road, it can be determined that path point elements between the selected path point elements should also belong to the same map element cluster. Then map element clusters corresponding to all the path point elements and the landmark elements can be obtained only by clustering the selected path point elements. That is, the sparsification of the path point elements can not only reduce the calculation amount and improve the efficiency, but also obtain the map element clusters corresponding to all the path point elements and the landmark elements, thereby reducing the requirement on hardware.

In step 307, a number of map elements in the map data are divided into a floor in accordance with the map element cluster.

In the embodiment of the present disclosure, the map data is acquired; the plurality of path point elements are determined from the map data; gradient information corresponding to the plurality of path point elements is determined; the target path point element corresponding to the flat mode is determined based on the gradient information; the target landmark element corresponding to the target path point element is determined; the map element cluster is obtained, by clustering a number of map elements in the map data based on the target map elements; and the number of map elements in the map data are divided into a floor in accordance with the map element cluster. In this way, floor division based on the map elements is achieved, such that the map data can be applied to multiple floors, and practicability of the map is improved.

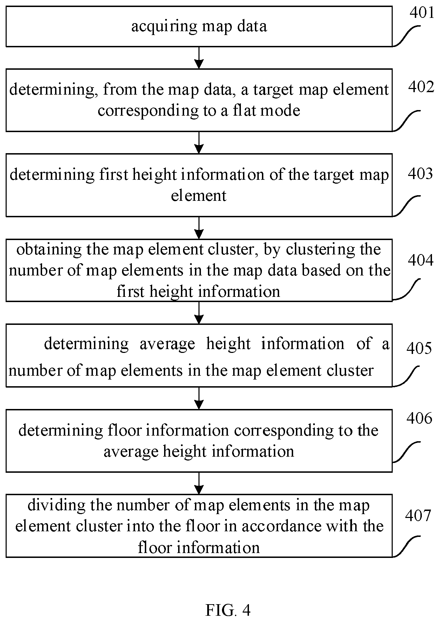

FIG. 4 is a flowchart illustrating steps of still another method for data processing according to an embodiment of the present disclosure. Referring to Fig. 4, the method specifically includes the following steps.

In step 401, map data is acquired.

In step 402, target map elements corresponding to a flat mode are determined from the map data.

In step 403, first height information of the target map elements is determined.

The first height information can be height information of the target map elements, and can also be relative height information of the target map elements with respect to the entrance landmark element.

After the target map elements are determined, height information corresponding to the target map elements can be determined from the map data, and height information corresponding to the entrance landmark element can also be determined from the map data, so that relative height information can be determined based on the height information of the target map elements and the height information of the entrance landmark element.

In step 404, a map element cluster is obtained, by clustering a number of map elements in the map data based on the height information.

After determining the height information, clustering is performed based on the height information of the map elements corresponding to the flat mode.

For example, map elements with height information of 1 to 3 meters can be classified into one type as a map element cluster A, and map elements with height information of 3 to 6 meters can be classified into another type as a map element cluster B. As such, one or more sets of map elements, that is, one or more map element clusters, can be obtained.

In an embodiment of the present disclosure, a height range can be set. For example, the height range may be 1.5 meters. Then the plurality of map elements may be clustered according to the height range.

For example, there may be 4 target map elements in the map data. The height information of the map element **a** may be 1 meter, the height information of the map element **b** may be 2 meters, the height information of the map element c may be 5 meters, and the height information of the map element **d** may be 6 meters. Then, it can be determined that the map element **a** and the map element **b** are of the same type and the map element c and the map element **d** are of the same type according to the height range. As such, one or more sets of map elements may be obtained.

In practical applications, DBSCAN (Density-Based Spatial Clustering of Applications with Noise) may be used for clustering. A scan distance parameter in DBSCAN may be set to 1.5 meters, and the number of samples may be set to 10, so that a plurality of sets of map elements with 10 map elements and a height range of 1.5 meters may be obtained.

In step 405, average height information of a number of map elements in the map element cluster is determined.

After the map element cluster is determined, all map elements in the map element cluster can be determined, and the height information corresponding to the map elements can be determined. Then, average height information of the map elements in the map element cluster can be calculated according to a sum of the height information corresponding to all the map elements.

For example, the map element cluster A may include a map element **a**, a map element **b**, and a map element **c**. The height information of the map element **a** may be 1 meter, the height information of the map element **b** may be 2 meters, and the height information of the map element **c** may be 3 meters. Then, the average height information of the map elements in the map element cluster A can be determined to be 2 meters.

In step 406, floor information corresponding to the average height information is determined.

After the average height information is determined, the map element clusters can be sequenced according to the average height information, and then the floors where the map element clusters are located can be determined according to the sequence of the average height information.

For example, the average height information of the map element cluster A may be 0.5 meter, the average height information of the map element cluster B may be 6 meters, the average height information of the map element cluster C may be 3.5 meters. Then the map element clusters may be sequenced according to the value of the average height information, so that the map element cluster A < the map element cluster C < the map element cluster B can be obtained. In addition, since the average height information is greater than 0, it may be determined that the floor information corresponding to the map element cluster A is a 1-st floor, the floor information corresponding to the map element cluster B is a 3-rd floor, and the floor information corresponding to the map element cluster C is a 2-nd floor.

In practical applications, if the average height information of the map element cluster is smaller than 0, it may be determined that the floor information corresponding to the map element cluster should be a basement floor. For example, the average height information of the map element cluster A may be 0.5 meters, and the average height information of the map element cluster B may be -3 meters. Then, it may be determined that the floor information corresponding to the map element cluster A is a 1-st floor and the floor information corresponding to the map element cluster B is a negative 1-st floor.

In step 407, a number of map elements in the map element cluster are divided into the floor in accordance with the floor information.

After the corresponding floor information is obtained, a number of map elements in the map data can be divided into a floor in accordance with the floor information.

For example, the floor information corresponding to the map element cluster A may be a 1-st floor, and the floor information corresponding to the map element cluster B may be a 2-nd floor, so that it may be determined that the map elements in the map element cluster A may be map elements of the 1-st floor, and the map elements in the map element cluster B may be map elements of the 2-nd floor.

In the embodiment of the present disclosure, the map data is acquired; the target map elements corresponding to the flat mode are determined from the map data; first height information of the target map elements is determined; the map element cluster is obtained, by clustering the number of map elements in the map data based on the first height information; the average height information of a number of map elements in the map element cluster is determined; the floor information corresponding to the average height information is determined; and the number of map elements in the map element cluster are divided into the floor in accordance with the floor information. In this way, floor division based on the map elements is achieved, such that the map data can be applied to multiple floors, and practicability of the map is improved.

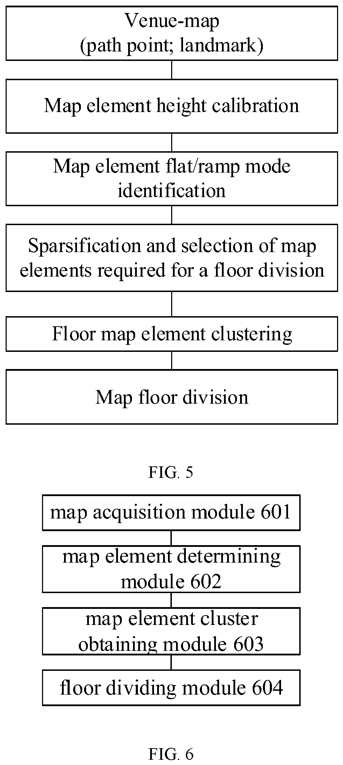

An embodiment of the present disclosure is illustrated below with reference to FIG. 5.
1. In practical applications, semantic map (Venue-map) data for a target scene can be acquired. The Venue-map data may include path point elements and landmark elements, and the landmark elements may include an entrance landmark element.
2. After obtaining the Venue-map data, a height calibration can be performed on the map data in the Venue-map data by taking the height information of the entrance landmark element as a reference.
3. After the height is calibrated, the map elements can be identified according to the calibrated height information, and then the map elements corresponding to the flat mode and the map elements corresponding to the ramp mode can be determined.
4. After the map elements corresponding to the flat mode and the map elements corresponding to the ramp mode are determined, the map elements corresponding to the flat mode can be sparsely selected according to a sparse distance, so that the map elements required for floor division can be selected.
5. After the map elements required for the floor division are selected, clustering can be performed according to the calibrated height information, so that map element clusters with different heights can be obtained.
6. After the map element clusters with different heights are obtained, the map element clusters can be sequenced based on the height information, and then the map elements can be divided into floors according to the sequencing result.

It should be noted that, in order to simplify description of the present disclosure, method embodiments of the present disclosure are expressed as combinations of series of actions, but it would be appreciated by those skilled in the art that the embodiments of the present disclosure are not limited by the order of the actions, for the reason that according to embodiments of the present disclosure, some steps may be executed in other orders or be executed at the same time. In addition, it would be further appreciated by those skilled in the art that embodiments described in the specification are preferred embodiments, and actions involved therein may not be necessary for the embodiments of the present disclosure.

FIG. 6 is a schematic diagram illustrating a structure of an apparatus for data processing according to an embodiment of the present disclosure. Referring to FIG. 6, the apparatus may specifically include the following modules.

A map acquisition module 601 is configured to acquire map data.

A map element determining module 602 is configured to determine, from the map data, target map elements corresponding to a flat mode.

A map element cluster obtaining module 603 is configured to obtain a map element cluster, by clustering a number of map elements in the map data based on the target map elements.

A floor dividing module 604 is configured to divide the number of map elements in the map data into a floor in accordance with the map element cluster.

In an embodiment of the present disclosure, the target map elements include a target path point element and a target landmark element. The map element determining module 602 includes the following submodules.

A path point element determining submodule is configured to determine, from the map data, a plurality of path point elements.

A gradient information determining submodule is configured to determine gradient information corresponding to the plurality of path point elements.

A target path point element determining submodule is configured to determine the target path point element corresponding to the flat mode based on the gradient information.

A target landmark element determining submodule is configured to determine the target landmark element corresponding to the target path point element.

In an embodiment of the present disclosure, the target path point element determining submodule includes the following units.

A mode coefficient determining unit is configured to determine mode coefficients corresponding to the plurality of path point elements based on the gradient information.

A corresponding element determining unit is configured to determine the target path point element corresponding to the flat mode based on the mode coefficients.

In an embodiment of the present disclosure, the map element cluster obtaining module 603 includes the following submodules.

A first height information determining submodule is configured to determine first height information of the target map elements.

A map element clustering submodule is configured to obtain the map element cluster, by clustering the number of map elements in the map data based on the first height information.

In an embodiment of the present disclosure, the floor dividing module 604 includes the following submodules.

An average height information determining submodule is configured to determine average height information of a number of map elements in the map element cluster.

A floor information determining submodule is configured to determine floor information corresponding to the average height information.

A map element floor division submodule is configured to divide the number of map elements in the map element cluster into the floor in accordance with the floor information.

In an embodiment of the present disclosure, the apparatus further includes the following modules.

An entrance landmark element determining module is configured to determine, from the map data, an entrance landmark element.

A height calibration module is configured to acquire second height information corresponding to the entrance landmark element, and perform a height calibration on the number of map elements in the map data by using the second height information as a reference.

In the embodiment of the present disclosure, the map data is acquired; the target map elements corresponding to the flat mode are determined from the map data; the map element cluster is obtained, by clustering a number of map elements in the map data based on the target map elements; and the number of map elements in the map data are divided into a floor in accordance with the map element cluster. In this way, floor division based on map elements is achieved, such that the map data can be applied to multiple floors, and practicability of the map is improved.

An embodiment of the present disclosure also provides a server including a processor, a memory, and a computer program stored on the memory and executable on the processor. The computer program, when executed by the processor, implements the method for data processing as described above.

An embodiment of the present disclosure further provides a computer-readable storage medium, having a computer program stored thereon. The computer program, when executed by a processor, performs the method for data processing as described above.

Since the apparatus embodiments are basically similar to the method embodiments, the description of the apparatus embodiments is relatively simple. For related information, reference may be made to a corresponding part of the description of the method embodiments.

Each embodiment in the specification is described in a progressive manner. Each embodiment focuses on differences from other embodiments. For the same or similar parts of various embodiments, reference can be made to each other.

Those skilled in the art should understand that the embodiments of the present disclosure can be provided as a method, an apparatus, or a computer program product. Therefore, the embodiments of the present disclosure may take the form of a complete hardware embodiment, a complete software embodiment, or an embodiment combining software and hardware. In addition, the embodiments of the present disclosure may take the form of a computer program product implemented on one or more computer-usable storage media (including but not limited to disk storage, Compact Disc Read-Only Memory (CD-ROM), optical storage, etc.) including computer-usable program codes.

The embodiments of the present disclosure are described with reference to flowcharts and/or block diagrams of the method, the terminal device (system), and the computer program product according to the embodiments of the present disclosure. It should be understood that each process and/or block in the flowcharts and/or block diagrams, and a combination of processes and/or blocks in the flowcharts and/or block diagrams can be achieved by computer program instructions. These computer program instructions can be provided to a processor of a general-purpose computer, a special-purpose computer, an embedded processing machine, or other programmable data processing terminal device to generate a machine, such that instructions executed by the processor of the computer or other programmable data processing terminal devices generate an apparatus for implementing functions specified in one or more processes in the flowchart and/or one or more blocks in the block diagram.

These computer program instructions can also be stored in a computer-readable memory that can guide a computer or other programmable data processing terminal devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices to enable a series of operation steps to be executed on the computer or other programmable terminal devices for producing computerimplemented processing, such that instructions executed on the computer or other programmable terminal devices provide steps for implementing functions specified in one or more processes in the flowchart and/or one or more blocks in the block diagram.

Although the preferred ones of embodiments of the present disclosure have been described, those skilled in the art can make additional changes and modifications to these embodiments once they learn the basic creative concept.

Further, it should be noted that relational terms herein, such as "first" and "second", are used only for differentiating one entity or operation from another entity or operation, rather than necessarily requiring or implying that there should be any real relationship or sequence between the entities or operations. Also, terms "comprise", "include" or any other variations thereof are meant to cover non-exclusive inclusion, such that a process, method, article or terminal device including a series of elements do not only include those elements, but also include other elements that are not explicitly listed or inherent to the process, method, article or terminal device. In a case that there are no more restrictions, an element defined by the statement "comprises a ..." does not exclude the presence of additional identical elements in the process, method, article or terminal device that includes the said element.

The above provides detailed description of the method and apparatus for data processing provided by the embodiments of the present disclosure. Specific examples are used herein to illustrate the principles and implementations of the present disclosure. The description of the above embodiments is only used to facilitate understanding of the method and a core idea thereof of the present disclosure. In addition, for those skilled in the art, according to the concept of the present disclosure, changes can be made to the specific implementations and the scope of application. In summary, the content of the specification should not be construed as a limitation to the present disclosure.

## Claims

1. A method for data processing, comprising:
acquiring (201) map data;
determining (202) target map elements from the map data, the target map elements being map elements corresponding to a flat mode, wherein a map element corresponding to the flat mode indicates that the map element is actually located on a flat road, the map elements including path point elements and landmark elements, wherein the path points elements are points on roads in the map data;
obtaining (203) a map element cluster, by clustering the target map elements based on height information of the target map elements; and
performing (204) floor division on the target map elements in accordance with height information corresponding to the map element cluster,
wherein the target map elements comprise target path point elements and target landmark elements,
and wherein said determining (202), from the map data, the target map elements corresponding to the flat mode comprises:
determining (302), from the map data, a plurality of path point elements;
determining (303) gradient information corresponding to each of the plurality of path point elements, the gradient information being angle information of the plurality of path point elements with respect to a horizontal plane;
determining (304) the target path point elements corresponding to the flat mode based on the gradient information; and
determining (305) the target landmark elements corresponding to the target path point elements.

2. The method according to claim 1, wherein said determining (304) the target path point element corresponding to the flat mode based on the gradient information comprises:
determining mode coefficients corresponding to the plurality of path point elements based on the gradient information; and
determining the target path point element corresponding to the flat mode based on the mode coefficients.

3. The method according to claim 1 or 2, wherein said obtaining (203) the map element cluster by clustering the target map elements based on the height information of the target map elements comprises:
determining (403) first height information of the target map elements; and
obtaining (404) the map element cluster, by clustering the target map elements based on the first height information.

4. The method according to claim 3, wherein said performing (204) the floor division on the target map elements in accordance with the height information corresponding to the map element cluster comprises:
determining (405) average height information of the target map elements in the map element cluster;
determining (406) floor information corresponding to the average height information; and
performing (407) the floor division on the target map elements in the map element cluster in accordance with the floor information.

5. The method according to claim 1, further comprising, prior to said determining (202), from the map data, the target map elements corresponding to the flat mode:
determining, from the map data, an entrance landmark element that is an entrance-and-exit of a regional road; and
acquiring second height information corresponding to the entrance landmark element, and performing a height calibration on the target map elements by using the second height information as a reference.

6. The method according to any one of claims 1 to 5, wherein the map data is map data for a multi-floor parking lot.

7. An apparatus for data processing, comprising:
a map acquisition module (601) configured to acquire map data;
a map element determining module (602) configured to determine target map elements from the map data, the target map elements being map elements corresponding to a flat mode, wherein a map element corresponding to the flat mode indicates that the map element is actually located on a flat road, the map elements including path point elements and landmark elements, wherein the path points elements are points on roads in the map data;
a map element cluster obtaining module (603) configured to obtain a map element cluster, by clustering the target map elements data based on height information of the target map elements; and
a floor division module (604) configured to perform floor division on the target map elements in accordance with height information corresponding to the map element cluster,
wherein the target map elements comprise target path point elements and target landmark elements,
and the map element determining module (602) comprises:
a path point element determining submodule configured to determine, from the map data, a plurality of path point elements;
a gradient information determining submodule configured to determine gradient information corresponding to each of the plurality of path point elements, the gradient information being angle information of the plurality of path point elements with respect to a horizontal plane;
a target path point element determining submodule configured to determine target path point elements corresponding to the flat mode based on the gradient information; and
a target landmark element determining submodule configured to determine target landmark elements corresponding to the target path point elements.

8. The apparatus according to claim 7, wherein the target path point element determining submodule comprises:
a mode coefficient determining unit configured to determine mode coefficients corresponding to the plurality of path point elements based on the gradient information; and
a corresponding element determining unit configured to determine the target path point element corresponding to the flat mode based on the mode coefficients.

9. The apparatus according to claim 7 or 8, wherein the map element cluster obtaining module (603) comprises:
a first height information determining submodule configured to determine first height information of the target map elements; and
a map element clustering submodule configured to obtain the map element cluster, by clustering the target map elements based on the first height information.

10. The apparatus according to claim 9, wherein the floor division module comprises:
an average height information determining submodule configured to determine average height information of the target map elements in the map element cluster;
a floor information determining submodule configured to determine floor information corresponding to the average height information; and
a map element floor division submodule configured to perform the floor division on the target map elements in the map element cluster in accordance with the floor information.

11. The apparatus according to claim 7, further comprising:
an entrance landmark element determining module configured to determine, from the map data, an entrance landmark element that is an entrance-and-exit of a regional road; and
a height calibration module configured to acquire second height information corresponding to the entrance landmark element, and performing a height calibration on the target map elements by using the second height information as a reference.

12. The apparatus according to any one of claims 7 to 11, wherein the map data is map data for a multi-floor parking lot.

13. A server, comprising a processor, a memory, and a computer program stored on the memory and executable on the processor, wherein the computer program, when executed by the processor, implements the method for data processing according to any one of claims 1 to 6.

14. A computer-readable storage medium, having a computer program stored thereon, wherein the computer program, when executed by a processor, performs the method for data processing according to any one of claims 1 to 6.

## Patentansprüche

1. Verfahren zur Datenverarbeitung, aufweisend:
Erwerben (201) von Kartendaten;
Bestimmen (202) von Ziel-Kartenelementen aus den Kartendaten, wobei die Ziel-Kartenelemente Kartenelemente sind, die einem flachen Modus entsprechen, wobei ein Kartenelement, das dem flachen Modus entspricht, anzeigt, dass sich das Kartenelement tatsächlich auf einer flachen Straße befindet, wobei die Kartenelemente Pfadpunktelemente und Wahrzeichenelemente enthalten, wobei die Pfadpunktelemente Punkte auf Straßen in den Kartendaten sind;
Erhalten (203) eines Kartenelement-Clusters, durch Clustern der Ziel-Kartenelemente auf der Grundlage von Höheninformationen der Ziel-Kartenelemente; und
Durchführen (204) einer Ebenenteilung an den Ziel-Kartenelementen in Übereinstimmung mit den dem Kartenelement-Cluster entsprechenden Höheninformationen,
wobei die Ziel-Kartenelemente Ziel-Pfadpunktelemente und Ziel-Wahrzeichenelemente aufweisen, und wobei das Bestimmen (202) von Ziel-Kartenelementen, die dem flachen Modus entsprechen, aus den Kartendaten aufweist:
Bestimmen (302) einer Vielzahl von Pfadpunktelementen aus den Kartendaten;
Bestimmen (303) von Gradienteninformationen, die jedem der Vielzahl von Pfadpunktelementen entsprechen, wobei die Gradienteninformationen Winkelinformationen der Vielzahl von Pfadpunktelementen in Bezug auf eine horizontale Ebene sind;
Bestimmen (304) von Ziel-Pfadpunktelementen, die dem flachen Modus entsprechen, basierend auf den Gradienteninformationen; und
Bestimmen (305) der Ziel-Wahrzeichenelemente, die den Ziel-Pfadpunktelementen entsprechen.

2. Verfahren nach Anspruch 1, bei dem das Bestimmen (304) von Ziel-Pfadpunktelemente, die dem flachen Modus entsprechen, auf der Grundlage der Gradienteninformationen aufweist:
Bestimmen von Moduskoeffizienten, die der Vielzahl von Pfadpunktelementen entsprechen, basierend auf den Gradienteninformationen; und
Bestimmen der Ziel-Pfadpunktelemente, die dem flachen Modus entsprechen, auf der Grundlage der Moduskoeffizienten.

3. Verfahren nach Anspruch 1 oder 2, bei dem das Erhalten (203) des Kartenelement-Clusters durch Clustern der Ziel-Kartenelemente basierend auf den Höheninformationen der Ziel-Kartenelemente aufweist:
Bestimmen (403) von ersten Höheninformationen der Ziel-Kartenelemente; und
Erhalten (404) des Kartenelement-Clusters durch Clustern der Ziel-Kartenelemente auf der Grundlage der ersten Höheninformationen.

4. Verfahren nach Anspruch 3, bei dem das Durchführen (204) der Ebenenteilung an den Ziel-Kartenelementen in Übereinstimmung mit der dem Kartenelement-Cluster entsprechenden Höheninformationen aufweist:
Bestimmen (405) der durchschnittlichen Höheninformationen der Ziel-Kartenelemente in dem Kartenelement-Cluster;
Bestimmen (406) von Ebeneninformationen, die den durchschnittlichen Höheninformationen entsprechen; und
Durchführen (407) der Ebenenteilung an den Ziel-Kartenelementen in dem Kartenelement-Cluster in Übereinstimmung mit der Ebeneninformationen.

5. Verfahren nach Anspruch 1, das vor dem Bestimmen (202) der Ziel-Kartenelemente aus den Kartendaten, die dem flachen Modus entsprechen, aus den Kartendaten, aufweist:
Bestimmen, aus den Kartendaten, eines Eingangswahrzeichenelements, das eine Einfahrt- und-Ausfahrt einer regionalen Straße ist; und
Erfassen von zweiten Höheninformationen, die dem Eingangswahrzeichenelement entsprechen, und Durchführen einer Höhenkalibrierung der Ziel-Kartenelemente unter Verwendung der zweiten Höheninformationen als Referenz.

6. Verfahren nach einem der Ansprüche 1 bis 5, bei dem die Kartendaten Kartendaten für einen mehrstöckigen Parkplatz sind.

7. Vorrichtung zur Datenverarbeitung, aufweisend:
ein Kartenerwerbmodul (601), das für den Erwerb von Kartendaten konfiguriert ist;
ein Kartenelement-Bestimmungsmodul (602), das konfiguriert ist, um Ziel-Kartenelemente aus den Kartendaten zu bestimmen, wobei die Ziel-Kartenelemente Kartenelemente sind, die einem flachen Modus entsprechen, wobei ein Kartenelement, das dem flachen Modus entspricht, anzeigt, dass sich das Kartenelement tatsächlich auf einer flachen Straße befindet, wobei die Kartenelemente Pfadpunktelemente und Wahrzeichenelemente enthalten, wobei die Pfadpunktelemente Punkte auf Straßen in den Kartendaten sind;
ein Modul (603) zum Erhalten von Kartenelement-Clustern, das so konfiguriert ist, dass es ein Kartenelement-Cluster durch Clustern der Ziel-Kartenelementdaten auf der Grundlage von Höheninformationen der Ziel-Kartenelemente erhält; und
ein Ebenenteilungsmodul (604), das so konfiguriert ist, dass es eine Ebenenteilung an den Ziel-Kartenelementen in Übereinstimmung mit den dem Kartenelement-Cluster entsprechenden Höheninformationen durchführt,
wobei die Ziel-Kartenelemente Ziel-Pfadpunktelemente und Ziel-Wahrzeichenelemente aufweisen, und das Kartenelement-Bestimmungsmodul (602) aufweist:
ein Untermodul zur Bestimmung von Pfadpunktelementen, das so konfiguriert ist, dass es aus den Kartendaten eine Vielzahl von Pfadpunktelementen bestimmt;
ein Untermodul zur Bestimmung von Gradienteninformationen, das so konfiguriert ist, dass es Gradienteninformationen bestimmt, die jedem der Vielzahl von Pfadpunktelementen entsprechen, wobei die Gradienteninformationen Winkelinformationen der Vielzahl von Pfadpunktelementen in Bezug auf eine horizontale Ebene sind;
ein Untermodul zur Bestimmung von Ziel-Pfadpunktelementen, das so konfiguriert ist, dass es auf der Grundlage der Gradienteninformationen Ziel-Pfadpunktelemente bestimmt, die dem flachen Modus entsprechen; und
ein Untermodul zur Bestimmung von Ziel-Wahrzeichenelementen, das so konfiguriert ist, dass es Ziel-Wahrzeichenelemente bestimmt, die den Ziel-Pfadpunktelementen entsprechen.

8. Vorrichtung nach Anspruch 7, bei der das Untermodul zur Bestimmung des Ziel-Pfadpunktelements aufweist:
eine Modenkoeffizienten-Bestimmungseinheit, die so konfiguriert ist, dass sie Modenkoeffizienten, die der Mehrzahl von Pfadpunktelementen entsprechen, auf der Grundlage der Gradienteninformationen bestimmt; und
eine Einheit zur Bestimmung des entsprechenden Elements, die so konfiguriert ist, dass sie das dem flachen Modus entsprechende Ziel-Pfadpunktelement auf der Grundlage der Moduskoeffizienten bestimmt.

9. Vorrichtung nach Anspruch 7 oder 8, bei der das Modul (603) zum Erhalten von Kartenelement-Clustern aufweist:
ein Untermodul zur Bestimmung erster Höheninformationen, das so konfiguriert ist, dass es erste Höheninformationen der Ziel-Kartenelemente bestimmt; und
ein Untermodul zum Clustern von Kartenelementen, das so konfiguriert ist, dass es das Kartenelement-Cluster durch Clustern der Ziel-Kartenelemente auf der Grundlage der ersten Höheninformationen erhält.

10. Vorrichtung nach Anspruch 9, bei der das Ebenenteilungsmodul aufweist:
ein Untermodul zum Bestimmen von durchschnittlichen Höheninformationen, das so konfiguriert ist, dass durchschnittliche Höheinformationen der Ziel-Kartenelemente in dem Kartenelement-Cluster bestimmt;
ein Untermodul zur Bestimmung von Ebeneninformationen, das so konfiguriert ist, dass es Ebeneninformationen bestimmt, die den durchschnittlichen Höheninformationen entsprechen; und
ein Untermodul für die Ebenenteilung von Kartenelementen, das so konfiguriert ist, dass es die Ebenenteilung auf den Ziel-Kartenelementen in dem Kartenelement-Cluster in Übereinstimmung mit der Ebeneninformationen durchführt.

11. Vorrichtung nach Anspruch 7, des Weiteren aufweisend:
ein Modul zum Bestimmen eines Eingangswahrzeichenelements, das so konfiguriert ist, dass es aus den Kartendaten ein Eingangswahrzeichenelement bestimmt, das eine Einfahrt-und-Ausfahrt einer regionalen Straße ist; und
ein Höhenkalibrierungsmodul, das so konfiguriert ist, dass es zweite Höheninformationen erfasst, die dem Eingangswahrzeichenelement entsprechen, und eine Höhenkalibrierung an den Ziel-Kartenelementen unter Verwendung der zweiten Höheninformationen als Referenz durchführt.

12. Vorrichtung nach einem der Ansprüche 7 bis 11, wobei die Kartendaten Kartendaten für einen mehrstöckigen Parkplatz sind.

13. Server, der einen Prozessor, einen Speicher und ein Computerprogramm aufweist, das in dem Speicher gespeichert und auf dem Prozessor ausführbar ist,
wobei das Computerprogramm, wenn es von dem Prozessor ausgeführt wird, das Verfahren zur Datenverarbeitung nach einem der Ansprüche 1 bis 6 implementiert.

14. Computerlesbares Speichermedium, auf dem ein Computerprogramm gespeichert ist, wobei das Computerprogramm, wenn es von einem Prozessor ausgeführt wird, das Verfahren zur Datenverarbeitung nach einem der Ansprüche 1 bis 6 durchführt.

## Revendications

1. Procédé de traitement de données, comprenant:
acquérir (201) de données de carte;
déterminer (202) des éléments de carte cibles à partir des données de carte, les éléments de carte cibles étant des éléments de carte correspondant à un mode plat, un élément de carte correspondant au mode plat indiquant que l'élément de carte se trouve effectivement sur une route plate, les éléments de carte comprenant des éléments de points de cheminement et des éléments de repère, les éléments de points de cheminement étant des points sur des routes dans les données de carte;
obtenir (203) d'un groupe d'éléments de carte, en regroupant les éléments de carte cibles sur la base d'informations d'altitude des éléments de carte cibles; et
effectuer (204) une division de plan sur les éléments de carte cibles en fonction des informations d'altitude correspondant au groupe d'éléments de carte,
dans lequel les éléments de carte de destination comprennent des éléments de point de cheminement de destination et des éléments de repère de destination, et dans lequel la détermination (202) d'éléments de carte de destination correspondant au mode plat à partir des données de carte comprend:
déterminer (302) une pluralité d'éléments de points de cheminement à partir des données de carte;
déterminer (303) des informations de gradient correspondant à chacun de la pluralité d'éléments de points de cheminement, les informations de gradient étant des informations angulaires de la pluralité d'éléments de points de cheminement par rapport à un plan horizontal;
déterminer (304) des éléments de points de cheminement cibles correspondant au mode plat, sur la base des informations de gradient; et
déterminer (305) les éléments de repère de destination correspondant aux éléments de point de cheminement de destination.

2. Procédé selon la revendication 1, dans lequel la détermination (304) d'éléments de points de cheminement cibles correspondant au mode plat sur la base des informations de gradient comprend:
déterminer des coefficients de mode correspondant à la pluralité d'éléments de points de cheminement, sur la base des informations de gradient; et
déterminer les éléments de points de cheminement cibles correspondant au mode plat sur la base des coefficients de mode.

3. Procédé selon la revendication 1 ou 2, dans lequel l'obtention (203) d'un groupe d'éléments de carte comprend le regroupement des éléments de carte cibles sur la base des informations d'altitude des éléments de carte cibles:
déterminer (403) des premières informations d'altitude des éléments de carte cibles; et
obtenir (404) le groupe d'éléments de carte en regroupant les éléments de carte cibles sur la base des premières informations d'altitude.

4. Procédé selon la revendication 3, dans lequel l'exécution (204) de la division de plan sur les éléments de carte cibles conformément aux informations d'altitude correspondant au groupe d'éléments de carte comprend:
déterminer (405) les informations d'altitude moyennes des éléments de carte cibles dans le groupe d'éléments de carte;
déterminer (406) des informations de plan correspondant aux informations d'altitude moyenne; et
effectuer (407) la division de plan sur les éléments de carte cibles dans le groupe d'éléments de carte conformément aux informations de plan.

5. Procédé selon la revendication 1, qui comprend, avant de déterminer (202) les éléments de carte cibles à partir des données de carte correspondant au mode plat, à partir des données de carte:
déterminer, à partir des données de carte, un repère d'entrée qui est une entrée et une sortie d'une route régionale; et
acquérir de secondes informations d'altitude correspondant à l'élément de repère d'entrée et la réalisation d'un étalonnage d'altitude des éléments de carte cible en utilisant les secondes informations d'altitude comme référence.

6. Procédé selon l'une quelconque des revendications 1 à 5, dans lequel les données de carte sont des données de carte pour un parking à plusieurs étages.

7. Dispositif de traitement de données, comprenant:
un module d'acquisition de carte (601) configuré pour l'acquisition de données de carte;
un module de détermination d'éléments de cartge (602) configuré pour déterminer des éléments de carte cibles à partir des données de carte, les éléments de carte cibles étant des éléments de carte correspondant à un mode plat, un élément de carte correspondant au mode plat indiquant que l'élément de carte se trouve effectivement sur une route plate, les éléments de carte comprenant des éléments de points de cheminement et des éléments de repères, les éléments de points de cheminement étant des points sur des routes dans les données de carte;
un module d'obtention de grappes d'éléments de carte (603) configuré pour obtenir une grappe d'éléments de carte en regroupant les données d'éléments de carte cibles sur la base d'informations d'altitude des éléments de carte cibles; et
un module de division de plan (604) configuré pour effectuer une division de plan au niveau des éléments de carte cibles en fonction des informations d'altitude correspondant au groupe d'éléments de carte,
dans lequel les éléments de carte de destination comprennent des éléments de point de cheminement de destination et des éléments de signe de destination, et le module de détermination d'éléments de carte (602):
un sous-module de détermination d'éléments de points de cheminement, configuré pour déterminer une pluralité d'éléments de points de cheminement à partir des données de carte;
un sous-module de détermination d'informations de gradient configuré pour déterminer des informations de gradient correspondant à chacun de la pluralité d'éléments de points de cheminement, les informations de gradient étant des informations angulaires de la pluralité d'éléments de points de cheminement par rapport à un plan horizontal;
un sous-module de détermination d'éléments de points de cheminement cibles, configuré pour déterminer des éléments de points de cheminement cibles correspondant au mode plat sur la base des informations de gradient; et
un sous-module de détermination d'éléments de repère de destination configuré pour déterminer des éléments de repère de destination correspondant aux éléments de point de cheminement de destination.

8. Dispositif selon la revendication 7, dans lequel le sous-module de détermination de l'élément de point de cheminement cible comprend:
une unité de détermination de coefficients de mode configurée pour déterminer des coefficients de mode correspondant à la pluralité d'éléments de points de cheminement sur la base des informations de gradient; et
une unité de détermination de l'élément correspondant, configurée pour déterminer l'élément de point de cheminement cible correspondant au mode plat sur la base des coefficients de mode.

9. Dispositif selon la revendication 7 ou 8, dans lequel module d'obtention de grappes d'éléments de carte (603) comprend :
un sous-module de détermination des premières informations d'altitude, configuré pour déterminer les premières informations d'altitude des éléments de carte cibles; et
un sous-module de regroupement d'éléments de carte configuré pour obtenir le regroupement d'éléments de carte en regroupant les éléments de carte cibles sur la base des premières informations d'altitude.

10. Dispositif selon la revendication 9, dans lequel le module de division de plan comprend:
un sous-module de détermination d'informations d'altitude moyenne configuré pour déterminer des informations d'altitude moyenne des éléments de carte cibles dans le groupe d'éléments de carte;
un sous-module de détermination d'informations de niveau configuré pour déterminer des informations de niveau correspondant aux informations d'altitude moyenne; et
un sous-module de division de niveau d'éléments de carte configuré pour effectuer la division de niveau sur les éléments de carte cibles dans le cluster d'éléments de carte conformément aux informations de niveau.

11. Dispositif selon la revendication 7, comprenant en outre:
un module de détermination d'un élément de repère d'entrée configuré pour déterminer, à partir des données de carte, un élément de repère d'entrée qui est une entrée et une sortie d'une route régionale; et
un module d'étalonnage d'altitude configuré pour acquérir des secondes informations d'altitude correspondant à l'élément de repère d'entrée et pour effectuer un étalonnage d'altitude sur les éléments de carte cibles en utilisant les secondes informations d'altitude comme référence.

12. Dispositif selon l'une quelconque des revendications 7 à 11, dans lequel les données de carte sont des données de carte pour un parking à plusieurs étages.

13. Serveur comprenant un processeur, une mémoire et un programme informatique stocké dans la mémoire et exécutable sur le processeur,
dans lequel le programme informatique, lorsqu'il est exécuté par le processeur, met en oeuvre le procédé de traitement de données selon l'une quelconque des revendications 1 à 6.

14. Support de stockage lisible par ordinateur sur lequel est stocké un programme d'ordinateur, dans lequel le programme d'ordinateur, lorsqu'il est exécuté par un processeur, exécute le procédé de traitement de données selon l'une quelconque des revendications 1 à 6.
